# EUROPÄISCHE PATENTSCHRIFT

(11) **EP 1 296 116 B1**
(45) Veröffentlichungstag und Bekanntmachung des Hinweises auf die Patenterteilung: **13.01.2010**
(21) Anmeldenummer: 02018419.8
(22) Anmeldetag: 16.08.2002
(51) Int. Cl.: G01C 21/36

(54) **Navigationssystem und Verfahren zur Einschaltsteuerung eines Navigationssystems**
Navigation system and method for starting up a navigation system
Système de navigation et procédé d'initialisation d'un système de navigation

(30) Priorität: 20.09.2001 DE 10146244
(43) Veröffentlichungstag der Anmeldung: 26.03.2003
(73) Patentinhaber: ROBERT BOSCH GMBH, 70442 Stuttgart (DE)
(72) Erfinder: Trenkler, Lutz, 37136 Waake (DE)

(56) Entgegenhaltungen:
- EP-A- 0 508 826
- US-A- 5 922 042
- US-B1- 6 172 643

## Beschreibung

Die Erfindung betrifft ein Verfahren zur Einschaltsteuerung eines Navigationssystems, bei dem innerhalb einer Nachlaufphase eingegebene Zielführungsinformationen in einem flüchtigen Speicher verfügbar gehalten werden.

Die Erfindung betrifft ferner ein Navigationssystem zur Zielführung mit einem flüchtigen Speicher für eingegebene Zielführungsinformationen, einem nicht-flüchtigen Speicher, einer Recheneinheit und mit Ruhestromsteuermitteln zur Teilausschaltung des Navigationssystems und Speicherung der Zielführungsinformationen in dem flüchtigen Speicher während einer Nachlaufphase.

In herkömmlichen Navigationssystemen, die insbesondere in Fahrzeugen eingebaut sind, erfolgt eine Zielführung eines Benutzers anhand von durch den Benutzer eingegebenen Zielführungsinformationen. Es ist bekannt, nach Ausschalten des Navigationssystems innerhalb einer Nachlaufphase die eingegebenen Zielführungsinformationen im sogenannten Standby-Modus in einem flüchtigen Speicher weiter verfügbar zu halten. Während des Standby-Modus wird der Stromverbrauch des Navigationssystems deutlich reduziert, wobei nur noch die notwendigsten Funktionen aktiviert bleiben und nur die benötigten Baugruppen minimal mit Spannung versorgt werden. Hierbei wird der flüchtige Speicher weiter mit Spannung versorgt, um den darin gespeicherten Inhalt, insbesondere die eingegebenen Zielführungsinformationen, beizubehalten. Nach einem erneuten Einschalten des Navigationssystems stehen somit nach einer Initialisierungsphase exakt die gleichen Informationen zur Verfügung, wie vor dem Abschalten. Dann kann die aktive Zielführung fortgesetzt und erst beendet werden, wenn das eingegebene Ziel erreicht ist. In dem Standby-Modus ist der Strombedarf zwar stark reduziert, jedoch für einen Dauerbetrieb in einem Fahrzeug immer noch zu hoch. Daher wird der Standby-Modus normalerweise nur zeitlich begrenzt aufrechterhalten. Nach Überschreiten einer Nachlaufzeit, das heißt eine definierte Zeit nach Ausschalten des Systems bis zur Beendigung des Standby-Modus, wird das Navigationssystem vollkommen ausgeschaltet und die eingegebenen Zielführungsinformationen sind nicht mehr verfügbar, da auch die Aktivierung des flüchtigen Speichers abgeschaltet wird. Bei Einschalten des Navigationssystems nach Ablauf der Nachlaufphase ist somit nachteilig die neue Eingabe der gewünschten Ziele durch den Benutzer erforderlich.

Die US-B1-6 172 643 offenbart ein Fahrzeugnavigationssystem, bei dem nach Abschalten der Fahrzeugzündung ein Standby-Betrieb für eine Zeitdauer aufrechterhalten wird. Wird das Fahrzeug noch während der Dauer dieses Standby-Betriebs wieder in Betrieb genommen, kann eine Zielführung, welche vor dem Abschalten des Fahrzeugs durchgeführt wurde, fortgesetzt werden. Die Zeitdauer, für die der Standby-Betrieb aufrecht erhalten wird, wird in Abhängigkeit des Betriebszustandes des Navigationssystems eingestellt, in welchem sich das Navigationssystem vor dem Abschalten der Fahrzeugzündung befunden hat, insbesondere in Abhängigkeit davon, ob bei zuvor eingeschalteter Fahrzeugzündung eine Zielführung stattgefunden hat, und des weiteren, ob das Ziel im Rahmen der Zielführung tatsächlich erreicht worden ist. Im letzteren Fall, also einer Zielführung, bei der das Fahrtziel nicht erreicht wurde, wird der Standby-Betrieb besonders lange aufrechterhalten, so dass das Fahrtziel für eine fortgesetzte Zielführung bei Weiterfahrt des Fahrzeugs innerhalb der vorgegebenen Zeitdauer zur Verfügung steht.

EP-A-0 508 826 offenbart ein Fahrzeugnavigationssystem, bei dem Fahrtziel-Informationen in einem Speicher abgelegt werden, so dass während einer Fahrt des Fahrzeugs auf einem im Fahrzeug-Innenraum angeordneten Display stets Entfernung und Richtung vom aktuellen Fahrzeugstandort zum Fahrtziel angezeigt werden können. Bei Antritt einer neuen Fahrt (nach Abstellen des Fahrzeugs) wird zunächst geprüft, ob das im Rahmen der vorangegangenen Fahrt angesteuerte Fahrtziel (hier definiert durch einen Umkreis um die Fahrtziel-Koordinaten) tatsächlich erreicht worden ist. Ist dies nicht der Fall, wird die Fahrtzietführung zu dem zuvor gespeicherten Fahrtziel fortgesetzt. Ist hingegen das Fahrtziel erreicht worden, werden die zugehörigen Fahrtziel-Informationen bei Antritt der neuen Fahrt automatisch gelöscht.

Aufgabe der Erfindung war es, ein verbessertes Verfahren zur Einschaltsteuerung eines Navigationssystems zu schaffen, mit dem die angegebenen Zielführungsinformationen auch nach Ablauf der Nachlaufzeit weiter verfügbar sind und das eine benutzerfreundliche Fortführung der Zielführung nach einem Wiedereinschalten des Navigationssystems ermöglicht.

Die Aufgabe wird mit dem gattungsgemäßen Verfahren erfindungsgemäß gelöst durch
a) Abspeichern der Zielführungsinformationen vor Ablauf der Nachlaufphase in einem nicht-flüchtigen Speicher und
   nach Wiedereinschalten des Navigationssystems
b) Überprüfen, ob ein abgespeichertes Ziel innerhalb einer definierten Entfernung, wie z. B. Luftlinie oder Straßenentfernung erreicht wurde und
c) automatisches Starten der Zielführung mit den abgespeicherten Zielführungsinformationen, wenn ein abgespeichertes Ziel noch nicht erreicht wurde und das Navigationssystem nicht länger als eine definierte Quittierungszeit nach dem Ende der Nachlaufphase ausgeschaltet war, und
d) bedienergesteuertes Starten der Zielführung mit den abgespeicherten Zielführungsinformationen, wenn ein abgespeichertes Ziel noch nicht erreicht wurde und das Navigationssystem länger als eine definierte Quittierungszeit nach dem Ende der Nachlaufphase ausgeschaltet war.

Es wird somit vorgeschlagen, noch vor der Überschreitung der Nachlaufzeit, möglichst kurz vor Beendigung des Standby-Modus, die eingegebenen Zielführungsinformationen in einem nicht-flüchtigen Speicher zu sichern.

Dann kann das gesamte Navigationssystem vollständig ausgeschaltet werden, ohne dass die eingegebenen Zielführungsinformationen verloren gehen.

Bei dem Wiedereinschalten des Navigationssystems wird zunächst überprüft, ob ein abgespeichertes Ziel gegebenenfalls innerhalb einer definierten Entfernung erreicht worden ist. Sofern ein Ziel innerhalb einer definierten Entfernung, wie z. B. Luftlinien- oder Straßenentfernung, erreicht wurde, wird keine neue Zielführung gestartet. Anderenfalls wird überprüft, wie lange das Navigationssystem ausgeschaltet war. Wenn das System kürzer als eine definierte Quittierungszeit ausgeschaltet war, wird die Zielführung mit den abgespeicherten Zielführungsinformationen automatisch wieder gestartet. Anderenfalls wird eine Benutzerabfrage durchgeführt und es kann von dem Benutzer festgelegt werden, ob die Zielführung fortgesetzt oder beendet wird.

Für das bedienergesteuerte Starten der Zielführung wird vorzugsweise eine Bedienerabfrageroutine durchgeführt, wobei eine Zielführung nicht fortgesetzt wird, wenn während einer definierten Eingabezeit keine Bedienerquittierungseingabe erfolgt ist. Das Navigationssystem kehrt dann in den Ausgangszustand für eine Benutzereingabe zurück.

Sofern die Zielführung aus einer Abfolge von mehreren Zielen besteht, wird das Überprüfen der Ziele dahingehend, ob das jeweils abgespeicherte Ziel erreicht wurde, für jedes Ziel vorzugsweise in der Reihenfolge der geplanten Route wiederholt.

Die Erfindung wird nachfolgend anhand der beigefügten Zeichnungen näher erläutert. Es zeigen:
- Figur 1 -: Zeitablaufdiagramm zur Definition der Nachlaufzeit und Quittierungszeit;
- Figur 2 -: Flussdiagramm des erfindungsgemäßen Verfahrens zur Einschaltsteuerung eines Navigationssystems:

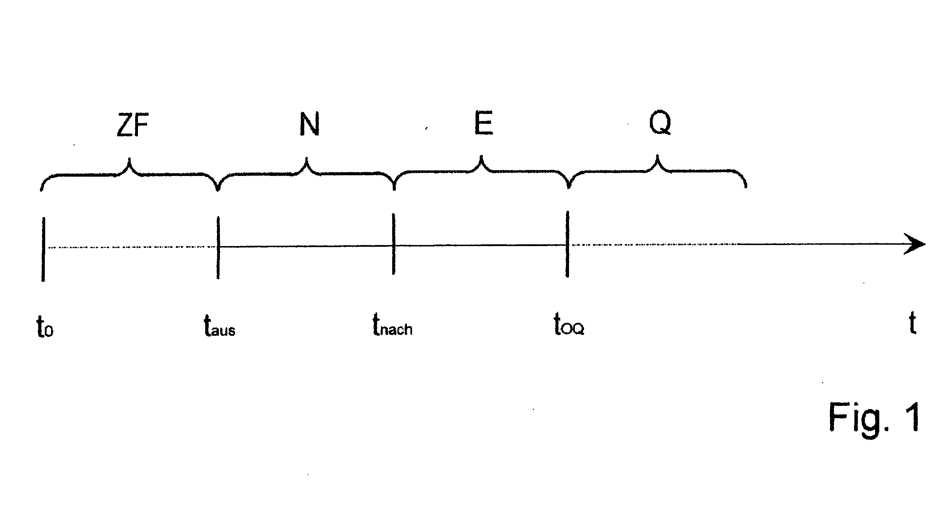

Die Figur 1 lässt ein Zeitablaufdiagramm mit Zeitabschnitten für verschiedene Phasen des Verfahrens zur Nutzung eines Navigationssystems erkennen. Während einer Zielführungsphase ZF ist das Navigationssystem eingeschaltet und es wird eine aktive Zielführung ausgeführt. In einem Ausschaltzeitpunkt tₐᵤₛ wird das Navigationssystem durch einen Bediener ausgeschaltet und während einer Nachlaufphase N in einem sogenannten Standby-Modus gehalten. Hierbei werden nicht unbedingt benötigte Funktionen und Bauelemente abgeschaltet oder reduziert mit Strom versorgt. Mindestens ein flüchtiger Speicher wird jedoch weiterhin betriebsbereit gehalten, in dem vorher eingegebene Zielführungsinformationen abgelegt sind. Die Länge der Nachlaufphase N ist fest definiert, so dass auch das Ende der Nachlaufzeit N zum definierten Nachlaufzeitpunkt t_{nach} festliegt.

Nach Ablauf der Nachlaufphase N wird das Navigationssystem vollständig ausgeschaltet. Jedoch wurden vorher die eingegebenen Zielführungsinformationen in einem nicht-flüchtigen Speicher abgelegt.

Weiterhin ist eine Wiedereinschaltphase E zwischen dem Ende der Nachlaufphase N und einem definierten Quittierungszeitpunkt t_{OQ} festgelegt.

Nach Ablauf der Einschaltungsphase E ist eine Quittierungsphase Q vorgesehen, in der die Zielführung nach Wiedereinschalten des Navigationssystems nicht mehr automatisch, sondern nur noch bedienergesteuert gestartet wird.

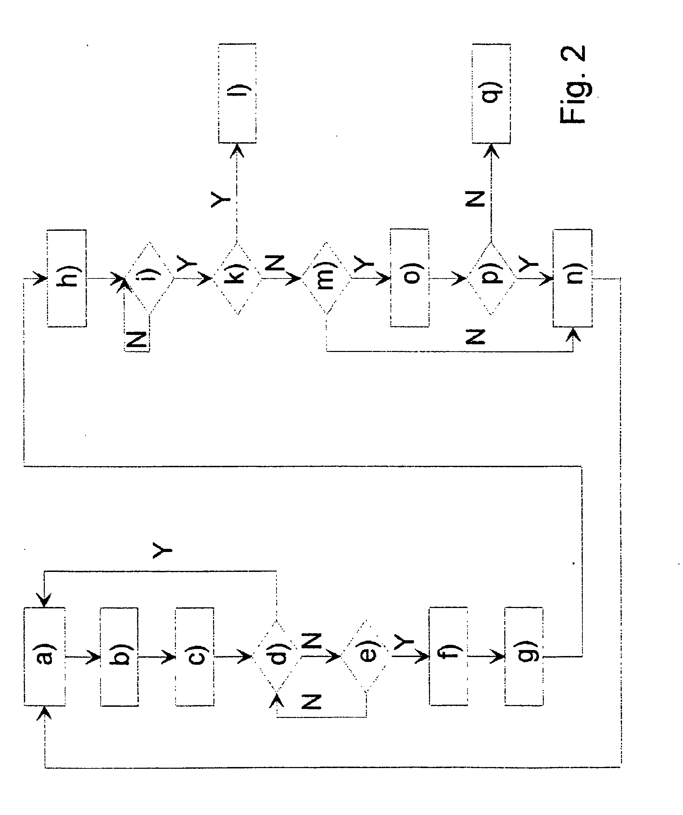

Die Figur 2 zeigt ein Flussdiagramm des erfindungsgemäßen Verfahrens zur Einschaltsteuerung eines Navigationssystems. In der ersten Phase a), das heißt der Zielführungsphase ZF, ist das Navigationssystem für die Zielführung aktiv eingeschaltet.

Wenn in einem Schritt b) das Navigationssystem ausgeschaltet wurde, wird in einem Schritt c) eine Nachlaufphase N mit einer definierten Nachlaufzeit t_{nach} gestartet.

Während der Nachlaufphase N wird in einem Schritt d) fortlaufend überprüft, ob der Einschalttaster des Navigationssystems betätigt wurde. Wenn dies der Fall ist, wird die Zielführung wieder aktiv fortgeführt. Hierbei wird auf die in einem flüchtigen Speicher abgelegten früher eingegebenen Zielführungsinformationen zurückgegriffen. Während der Nachlaufphase N werden diese Zielführungsinformationen in dem flüchtigen Speicher bereitgehalten.

In einem Schritt e) wird überprüft, ob der definierte Nachlauf-Zeitpunkt t_{nach} überschritten ist und es erfolgt gegebenenfalls in einem Schritt f) eine Sicherung der eingegebenen Zielführungsinformationen in einem nicht-flüchtigen Speicher.

Anschließend wird das Navigationssystem in einem Schritt g) abgeschaltet und in einem Schritt h) ein Zeitzähler beginnend von dem Ende des Nachlauf-Zeitpunktes t_{nach} gestartet. Während dieser Wiedereinschaltphase E wird fortlaufend in einem Schritt i) überprüft, ob ein Einschalttaster betätigt wurde. Wenn dies der Fall ist, wird in einer Abfrage k) weiterhin überprüft, ob ein vorher eingegebenes Ziel innerhalb einer definierten Entfernung, wie z. B. Luftlinien- oder Straßenentfernung, erreicht worden ist. Wenn das eingegebene Ziel bereits erreicht wurde, wird in einem Schritt I) das Navigationssystem mit einer neuen Zieleingabe des Benutzers gestartet und somit in den Ausgangszustand zurückgesetzt. Anderenfalls wird in einer Abfrage m) fortlaufend überprüft, ob der Zeitzähler eine definierte Quittierungszeit t_{OQ} erreicht hat. Sofern das Navigationssystem innerhalb der Wiedereinschaltphase E wieder eingeschaltet wurde, wird die letzte Zielführung automatisch in einem Schritt n) fortgesetzt. Sofern das Einschalten des Navigationssystems erst nach Ablauf der Quittierungszeit t_{OQ} in der Quittierungsphase Q nach Ende der Einschaltphase E erfolgt, wird in einem Schritt o) eine Quittierungsmaske angezeigt und der Bediener aufgefordert, mit einer Bedienerquittierungseingabe die Zielführung abzubrechen oder den Schritt n) zum Fortsetzten der letzten Zielführung zu starten. Die Quittierungsmaske startet hierfür eine Bedienerabfrageroutine p), in der abgefragt wird, ob die angezeigte Zielführung fortgesetzt werden soll. Bei einer negativen Bedienerquittierungseingabe oder nach Ablauf einer definierten Eingabezeit, ohne dass eine Bedienerquittierungseingabe erfolgt ist, wird die Zielführung in einem Schritt q) abgebrochen und das Navigationssystem in den Ausgangszustand zurückgesetzt und eine neue Zieleingabe des Benutzers ermöglicht.

## Patentansprüche

1. Verfahren zur Einschaltsteuerung eines Navigationssystems, bei dem innerhalb einer Nachlaufphase (N) eingegebene Zielführungsinformationen in einem flüchtigen Speicher verfügbar gehalten werden, **gekennzeichnet durch**
a) Abspeichern der Zielführungsinformationen vor Ablauf der Nachlaufphase (N) in einem nicht-flüchtigen Speicher, und
nach Wiedereinschalten des Navigationssystems
b) Überprüfen, ob ein abgespeichertes Ziel innerhalb einer definierten Entfernung erreicht wurde und
c) automatisches Starten der Zielführung mit den abgespeicherten Zielführungsinformationen, wenn ein abgespeichertes Ziel noch nicht erreicht wurde und das Navigationssystem nicht länger als eine definierte Quittierungszeit nach dem Ende der Nachlaufphase (N) ausgeschaltet war und
d) Bedienergesteuertes Starten der Zielführung mit den abgespeicherten Zielführungsinformationen, wenn ein abgespeichertes Ziel noch nicht erreicht wurde und das Navigationssystem länger als eine definierte Quittierungszeit nach dem Ende der Nachlaufphase (N) ausgeschaltet war.

2. Verfahren nach Anspruch 1, **dadurch gekennzeichnet, dass** zum bedienergesteuerten Starten der Zielführung eine Bedienerabfrageroutine ausgeführt wird, wobei eine Zielführung nicht fortgesetzt wird, wenn während einer definierten Eingabezeit keine Bedienerquittierungseingabe erfolgt ist.

3. Verfahren nach einem der Ansprüche 1 oder 2, **gekennzeichnet durch** Überprüfen einer Folge von Zielen im Schritt b) dahingehend, ob das jeweils abgespeicherte Ziel erreicht wurde.

4. Navigationssystem zur Zielführung mit einem flüchtigen Speicher für eingegebene Zielführungsinformationen, einem nicht-flüch-tigen Speicher, einer Recheneinheit und mit Ruhestrom-steuermitteln zur Teilausschaltung des Navigationssystems und Speicherung der Zielführungsinformationen in dem flüchtigen Speicher während einer Nachlaufzeit, **dadurch gekennzeichnet, dass** das Navigationssystem zur Durchführung des Verfahrens nach einem der vorhergehenden Ansprüche ausgebildet ist.

## Claims

1. Method for switch-on control for a navigation system, in which routing information which is input within a slow-down phase (N) is kept available in a volatile memory, **characterized by**
a) the routing information being stored in a non-volatile memory before the slow-down phase (N) elapses, and
when the navigation system has been switched on again,
b) a check being performed to determine whether a stored destination has been reached within a defined range and
c) the routing being automatically started with the stored routing information if a stored destination has not yet been reached and the navigation system was not switched off for longer than a defined acknowledgement time after the end of the slow-down phase (N) and
d) the routing being started under user control with the stored routing information if a stored destination has not yet been reached and the navigation system was switched off for longer than a defined acknowledgement time after the end of the slow-down phase (N).

2. Method according to Claim 1, **characterized in that** a user interrogation routine is performed for the purpose of starting the routing under user control, with routing not being continued if no user acknowledgement input has been made during a defined input time.

3. Method according to one of Claims 1 and 2, **characterized by** a series of destinations being checked in step b) to determine whether the respective stored destination has been reached.

4. Navigation system for routing with a volatile memory for input routing information, a non-volatile memory, a computation unit and with quiescent-current control means for partially switching off the navigation system and storing the routing information in the volatile memory during a slow-down time, **characterized in that** the navigation system is designed to carry out the method according to one of the preceding claims.

## Revendications

1. Procédé de commande du branchement d'un système de navigation dans lequel des informations de guidage vers une destination introduites pendant une phase (N) de fonctionnement à vide sont maintenues disponibles dans une mémoire volatile,
**caractérisé par** les étapes qui consistent à :
a) avant la fin de la phase (N) de fonctionnement à vide, conserver les informations de guidage vers une destination dans une mémoire non volatile et après rebranchement du système de navigation
b) vérifier si une destination conservée en mémoire et située à une distance définie a été atteinte,
c) démarrer automatiquement le guidage vers la destination avec les informations de guidage vers la destination conservées en mémoire si la destination conservée en mémoire n'a pas encore été atteinte et si après la fin de la phase (N) de fonctionnement à vide, le système de navigation n'a pas été débranché plus longtemps qu'une durée définie de confirmation et
d) sous la commande de l'utilisateur, démarrer le guidage vers la destination avec les informations conservées en mémoire de guidage vers la destination si la destination conservée en mémoire n'a pas encore été atteinte et si après la fin de la phase (N) de fonctionnement à vide, le système de navigation a été débranché plus longtemps qu'une durée définie de confirmation.

2. Procédé selon la revendication 1, **caractérisé en ce qu'**une routine d'interrogation de l'utilisateur est exécutée pour lancer le guidage vers la destination sous la commande de l'utilisateur, le guidage vers la destination n'étant pas poursuivi si l'utilisateur n'a pas introduit de confirmation pendant un délai d'introduction défini.

3. Procédé selon l'une des revendications 1 ou 2, **caractérisé par** l'étape qui consiste à vérifier si chaque destination d'une succession de destinations conservées en mémoire à l'étape b) a été atteinte ou non.

4. Système de navigation permettant le guidage vers une destination et doté
d'une mémoire volatile pour l'introduction d'informations de guidage vers une destination,
d'une mémoire non volatile,
d'une unité de calcul et
de moyens de contrôle du courant de repos permettant le débranchement partiel du système de navigation et la mise en mémoire des informations de guidage vers une destination dans la mémoire volatile pendant une durée de fonctionnement à vide,
**caractérisé en ce que**
le système de navigation est configuré pour exécuter le procédé selon l'une des revendications précédentes.
